# EUROPEAN PATENT APPLICATION

(11) **EP 4 718 775 A1**
(43) Date of publication of application: **01.04.2026**
(21) Application number: 24830501.3
(22) Date of filing: 12.06.2024
(51) Int. Cl.: H04L 9/40

(54) **IDENTITY INFORMATION VERIFICATION METHOD AND SYSTEM, STORAGE MEDIUM, AND ELECTRONIC DEVICE**

(30) Priority: 30.06.2023 CN 202310803496
(71) Applicant: ZTE CORPORATION, Shenzhen, Guangdong 518057 (CN)
(72) Inventor: GUO, Tian, Shenzhen, Guangdong 518057 (CN)
(74) Representative: Pennacchio, Salvatore Giovanni
(86) International application number: PCT/CN2024/098781
(87) International publication number: WO 2025/001855

(57) **Abstract**

Provided are an identity information verification method and system, and a storage medium and an electronic device. The above method includes: receiving a verification request sent by a data subject; and in a case where the verification request indicates verification of identity information of a privacy data subject, verifying the identity information of the privacy data subject according to a first sub-public key in the verification request, where the verification request includes the first sub-public key of the privacy data subject, the first sub-public key is a public key generated by the privacy data subject according to a first identity key allocated by a management device and a preset rule, and the first sub-public key is an identity identifier of the privacy data subject.

## Description

The present disclosure claims priority to Chinese Patent Application No. 202310803496.5 filed to the China National Intellectual Property Administration on June 30, 2023 and entitled "Identity Information Verification Method and System, Storage Medium and Electronic Device", the disclosure of which is hereby incorporated by reference in its entirety.

### Technical Field

Embodiments of the present disclosure relate to the field of communications, and specifically to an identity information verification method and system, and a storage medium and an electronic device.

### Background

With the rapid development of the information industry, data privacy protection has increasingly drawn attention and importance within the industry. Many countries and organizations have established strict laws and regulations to protect personal privacy. For example, the European Union (EU) enacted the General Data Protection Regulation (GDPR), which mandates that companies must obtain explicit consent from consumers before collecting their personal data. The United States protects consumer privacy and security through measures such as the California Consumer Privacy Act, the Personal Information Protection and Electronic Documents Act, etc. Moreover, countries such as China, Japan, Australia, etc. have also enacted similar laws to protect personal privacy and data security.

However, with the continuous development of the information technology, the data size generated in people's daily lives has grown increasingly massive. Under the current management mode, regulatory authorities find it difficult to effectively oversee all data flows. Furthermore, since privacy data often has significant analytical and commercial value, many enterprises, driven by self-interest, induce the customers to consent to disclosing personal privacy information in order to circumvent laws or even directly disregard the laws, so as to collect and use privacy data. Finally, many companies lack sufficient expertise and investment in security measures, frequently resulting in the leakage of confidential data due to mismanagement or cyberattacks, and once the privacy data is leaked, the damage is irreversible.

There are two main reasons for the above problems. The enterprises can directly contact the privacy data, and administrative organizations have no enforceable constraints on the infringement of the privacy data.

Currently, in the vast majority of cases, the enterprises have direct access to the privacy data provided by customers. Even when the enterprises are required by management regulations to anonymize and report the privacy data, the entire data processing process is completed by the enterprises themselves, and thus, the original privacy information remains visible to the enterprises. Currently, the administrative organizations primarily constrain enterprise behaviors through laws and regulations and generally refrain from directly intervening in the data processing process of the enterprises (primarily due to considerations of administrative costs), such that if the enterprises decide to infringe upon and use the privacy data for some reason, the administrative organizations find it difficult to detect and prevent such actions in a timely manner, and they can only impose punitive measures at best after the damage has already been done.

Therefore, there are problems of low security, easy leakage, etc. of user privacy data in the related art.

### Summary

Embodiments of the present disclosure provide an identity information verification method and system, and a storage medium and an electronic device, so as to at least solve the problems of low security, easy leakage, etc. of user privacy data in the related art.

According to an embodiment of the present disclosure, an identity information verification method is provided and includes: a verification request sent by a data subject is received; and in a case where the verification request indicates verification of identity information of a privacy data subject, the identity information of the privacy data subject is verified according to a first sub-public key in the verification request, where the verification request includes the first sub-public key of the privacy data subject, the first sub-public key is a public key generated by the privacy data subject according to a first identity key allocated by a management device and a preset rule, and the first sub-public key is an identity identifier of the privacy data subject.

According to another embodiment of the present disclosure, an identity information verification system is provided and includes: a data subject, configured to send a verification request to a management device; and the management device, configured to receive the verification request, and in a case where the verification request indicates verification of identity information of a privacy data subject, verify the identity information of the privacy data subject according to a first sub-public key in the verification request, wherein the verification request comprises the first sub-public key of the privacy data subject, the first sub-public key is a public key generated by the privacy data subject according to a first identity key allocated by a management device and a preset rule, and the first sub-public key is an identity identifier of the privacy data subject.

According to yet another embodiment of the present disclosure, a computer-readable storage medium is further provided. The computer-readable storage medium stores a computer program. The computer program is configured to, when being run, implement steps in any one of the above method embodiments.

According to still another embodiment of the present disclosure, an electronic device is further provided and includes a memory and a processor. The memory stores a computer program. The processor is configured to run the computer program to execute steps in any one of the above method embodiments.

### Brief Description of the Drawings

Fig. 1 is a block diagram of a hardware structure of a computer terminal of an identity information verification method according to an embodiment of the present disclosure.
Fig. 2 is a flowchart of an identity information verification method according to an embodiment of the present disclosure.
Fig. 3 is a flowchart of sub-key derivation according to an embodiment of the present disclosure.
Fig. 4 is a flowchart of legitimacy verification of an identity key according to an embodiment of the present disclosure.
Fig. 5 is a flowchart of data update according to an embodiment of the present disclosure.
Fig. 6 is a flowchart of data registration according to an embodiment of the present disclosure.
Fig. 7 is a flowchart of identity key generation according to an embodiment of the present disclosure.
Fig. 8 is an authentication flowchart according to an embodiment of the present disclosure.
Fig. 9 is a flowchart of data query according to an embodiment of the present disclosure.
Fig. 10 is a schematic diagram of a layered key system according to an embodiment of the present disclosure.
Fig. 11 is a relationship diagram of system modules according to an embodiment of the present disclosure.
Fig. 12 is a schematic application diagram of an e-commerce scenario according to an embodiment of the present disclosure.
Fig. 13 is a structural block diagram of an identity information verification system according to an embodiment of the present disclosure.

### Detailed Description of the Embodiments

The embodiments of the present disclosure are described below in detail with reference to the drawings and in conjunction with the embodiments.

It is to be noted that terms "first", "second" and the like in the description, claims and the above mentioned drawings of the present disclosure are used for distinguishing similar objects rather than describing a specific sequence or a precedence order.

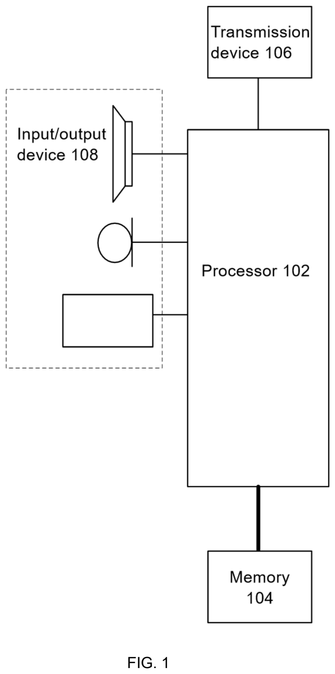

The method embodiments provided in the embodiments of the present disclosure may be executed in a mobile terminal, a computer terminal or a similar computing apparatus. Taking operation on the computer terminal as an example, Fig. 1 is a block diagram of a hardware structure of a computer terminal of an identity information verification method according to an embodiment of the present disclosure. As shown in Fig. 1, the computer terminal may include one or more (only one is shown in Fig. 1) processors 102 (the processor 102 may include, but is not limited to, a Microcontroller Unit (MCU) or a Field Programmable Gate Array (FPGA), or other processing apparatuses) and a memory 104 configured to store data. The above computer terminal may further include a transmission device 106 configured to achieve a communication function, and an input/output device 108. Those skilled in the art may understand that the structure shown in Fig. 1 is only a schematic diagram, which does not limit the structure of the above computer terminal. For example, the computer terminal may further include more or less components than those shown in Fig. 1, or have a different configuration from that shown in Fig. 1.

The memory 104 may be configured to store a computer program, for example, a software program and a module of application software, such as a computer program corresponding to an identity information verification method in the embodiments of the present disclosure. The processor 102 runs the computer program stored in the memory 104, so as to execute various functional applications and data processing, that is, to implement the above method. The memory 104 may include a high-speed random access memory, and may further include a non-volatile memory, such as one or more magnetic disk memory apparatuses, a flash memory device, or other non-volatile solid-state memory devices. In some examples, the memory 104 may further include memories remotely disposed relative to the processor 102. The remote memories may be connected to the computer terminal by using a network. Examples of the above network include, but are not limited to, the Internet, an intranet, a local area network, a mobile communication network, and a combination thereof.

The transmission apparatus 106 is configured to receive or send data via the network. The specific example of the above network may include a wireless network provided by a communication provider of the computer terminal. In an example, the transmission apparatus 106 includes a Network Interface Controller (NIC), and may be connected to other network devices by using a base station, so as to communicate with the Internet. In an example, the transmission apparatus 106 is a Radio Frequency (RF) module, which is configured to communicate with the Internet in a wireless manner.

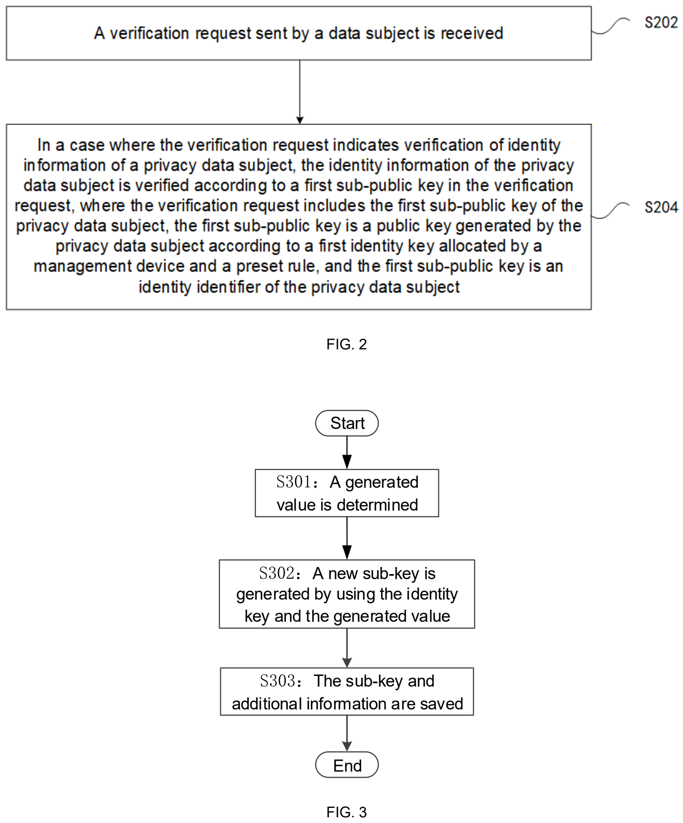

Fig. 2 is a flowchart of an identity information verification method according to an embodiment of the present disclosure. As shown in Fig. 2, the flow includes the following steps.

At S202, a verification request sent by a data subject is received.

At S204, in response to the verification request indicates verification of identity information of a privacy data subject, the identity information of the privacy data subject is verified according to a first sub-public key in the verification request, where the verification request includes the first sub-public key of the privacy data subject, the first sub-public key is a public key generated by the privacy data subject according to a first identity key allocated by a management device and a preset rule, and the first sub-public key is an identity identifier of the privacy data subject.

Through the above steps, in response to the verification request indicates verification of identity information of the privacy data subject, the identity information of the privacy data subject is verified according to the first sub-public key in the verification request, where the verification request includes the first sub-public key of the privacy data subject, the first sub-public key is the public key generated by the privacy data subject according to the first identity key allocated by the management device and the preset rule, and the first sub-public key is the identity identifier of the privacy data subject. That is, the privacy subject in the embodiments of the present disclosure uses the identity key to derive the sub-key and uses the public key in the sub-key as the identity identifier, such that only the management device may verify the identity information of the privacy data subject according to the sub-key. The problems of low security, easy leakage, etc. of user privacy data in the related art may be solved, thereby achieving an effect of reducing privacy data exposure.

Optionally, the identity information of the privacy data subject is verified by the following steps.

At S11, a plurality of second sub-keys respectively corresponding to a plurality of second identity keys are generated according to the preset rule, where the plurality of second identity keys are identity keys that have been issued by the management device, and the plurality of second identity keys include at least the first identity key.

At S12, determining whether the first sub-public key is consistent with any one of second sub-public keys corresponding to the plurality of second sub-keys.

At S13, in a case where the first sub-public key is consistent with any one of second sub-public keys corresponding to the plurality of second sub-keys, a first identity key corresponding to any one of the second sub-public keys is determined, and target data is determined according to a correspondence relationship between the first identity key and the target data.

At S14, interaction information carried in the verification request is acquired, where the interaction information is used to indicate verification of whether the privacy data subject is legitimate in a target scenario.

At S15, whether the privacy data subject is legitimate in the target scenario is verified according to the target data.

At S16, in a case where the first sub-public key is consistent with any one of second sub-public keys corresponding to the plurality of second sub-keys and it is determined that the privacy data subject is legitimate in the target scenario, it is determined that the identity information of the privacy data subject is legitimate.

It may be understood that, the privacy data subject may generate, according to its own requirements and the preset rule, the sub-key corresponding to the identity key of the privacy data subject. When the privacy data subject interacts with other data subjects, the sub-public key in the sub-key serves as the identity identifier of the privacy data subject.

Since the above preset rule is agreed by the privacy data subject together with an administrative organization, the administrative organization (which is equivalent to the management device in the above embodiments) can deduce, according to the learned identity key and the preset rule, all sub-keys that may be generated by the privacy data subject, and compare same with the first sub-public key. In a case where the first sub-public key is consistent with any one of sub-public keys in the sub-keys deduced by the administrative organization, it indicates that the first sub-public key is legitimate, and the first sub-public key is derived from one recorded identity key, the target data of the data subject may be determined according to an association relationship between the recorded identity key and the target data, and whether the privacy data subject is legitimate in the target scenario is determined according to the target data.

Further, the privacy data subject may generate the plurality of sub-keys according to its own requirements, and select different sub-keys from different interaction flows to avoid external tracking of its own behavior and identity, thereby greatly reducing the probability of exposure of privacy data, and reducing the risk of data exposure. The privacy data subject may also disclose the association relationship of a portion of the sub-keys to a specific subject for certain reasons (e.g., in order to obtain better services), such that the specific subject can know that these sub-keys correspond to the same subject (thereby providing better services to privacy subjects). However, regardless of the choice, in addition to the above administrative organization and the privacy data subject itself, no one can directly acquire data of the privacy data subject, nor can they easily associate and threaten a true identity of the privacy data subject by digging and analyzing the plurality of sub-keys. Control over the generation and use of sub-keys, as well as the exposure of association relationships, are held by the privacy data subject, even if partial sub-key association information has been exposed to a malicious subject, the privacy subject may also easily implement defenses and control the scope of damage (e.g., generating and using a new sub-key and no longer using the sub-key that has been exposed).

An embodiment of the present disclosure provides a manner of generating the sub-key by the privacy data subject. A sub-key derivation flow of the privacy data subject is shown in Fig. 3, and specifically includes the following steps.

At S301, a generated value is determined according to the preset rule.

Specifically, the privacy data subject first needs to determine one generated value according to the preset rule. The preset rule may be made by the administrative organization. For example, it is ruled that the generated value must be randomly selected within an integer range of [1-2048]; or generated value = identity public key + generated number (an initial value of the generated number is 0 and increases by 1 each time a sub-key is generated, a maximum value is 2048, and the generated number is circularly used). Since the rule of the generated value is made by the administrative organization, the administrative organization can independently deduce all the generated values that may be used by the privacy data subject, and deduce, according to the generated values, all the sub-keys that may be generated by the privacy data subject.

At S302, a new sub-key (which is equivalent to a first sub-key in the above embodiments) is generated according to the identity key (which is equivalent to the above first identity key) and the generated value.

Specifically, the privacy data subject derives the new sub-key by using its own identity key and the generated value. A derivation algorithm includes, but is not limited to, a Key Derivation Function (KDF) algorithm.

At S303, the sub-key and additional information are saved.

Specifically, the privacy data subject locally saves and records the generated sub-key and the additional information (e.g., the corresponding generated value) for subsequent use.

The above interaction information may be configured to verify whether a natural person is legitimate (Does this person exist? Is the age of this person legitimate within the context of a current order? Is the fund balance of this person sufficient to complete the current order?)

Through the above embodiments, a verification party may only determine whether the data subject is legitimate in a current scenario and cannot acquire the privacy data of the data subject, such that the problems of low security, easy leakage, etc. of user privacy data in the related art are solved, thereby greatly reducing an exposure probability of privacy data, and reducing the risk of data exposure.

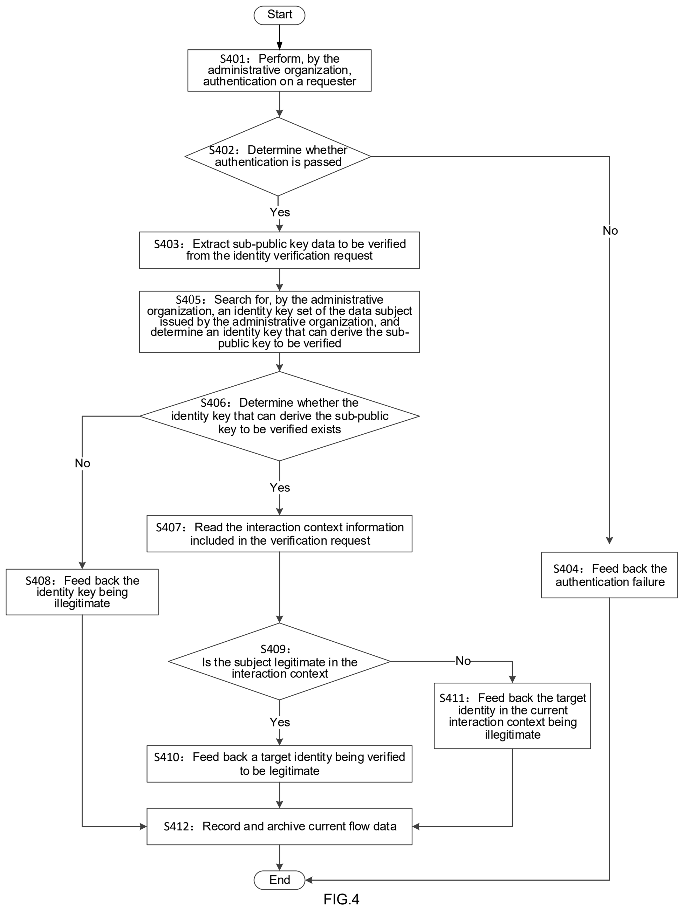

The privacy data and a true identity it represents are represented by one sub-public key. When an interactive participant needs to verify whether one sub-public key is legitimate (whether the sub-public key has been registered at the administrative organization) and whether the corresponding privacy subject is legitimate within the context of the current interaction (for example, a natural person with a record of dishonesty is prohibited from participating in a specific commercial activity), an identity legitimacy verification flow needs to be initiated to the administrative organization, and specifically has the following steps, as shown in Fig. 4.

At S401, the administrative organization performs authentication on a requester.

At S402, whether authentication is passed is determined.

At S403, in a case where the authentication is passed, a sub-public key to be verified is extracted from the verification request, where the verification request include sub-public key information to be verified (which is equivalent to the above first sub-public key) and interaction context information (which is equivalent to the above interaction information).

At S404, in a case where the authentication is not passed, that an authentication failure is fed back.

At S405, the administrative organization searches for an identity key set of the data subject issued by the administrative organization, and determines an identity key that can derive the sub-public key to be verified.

At S406, whether the identity key that can derive the sub-public key to be verified exists is determined.

At S407, in a case where the identity key that can derive the sub-public key to be verified exists, the interaction context information included in the verification request is read (for example, the current verification request is to complete a specific commercial behavior).

At S408, in a case where the identity key that can derive the sub-public key to be verified does not exist, that the identity key is illegitimate is fed back.

At S409, whether the subject is legitimate in the interaction context is determined by combining the identity of the data subject and privacy information.

At S410, in a case where the data subject is legitimate in the interaction context, that a target identity is verified to be legitimate is fed back.

At S411, in a case where the data subject is illegitimate in the interaction context, that the target identity in the current interaction context is illegitimate is fed back.

At S412, current flow data is recorded and archived.

Optionally, in a case where the verification request indicates verification of the identity information of the non-privacy data subject, the identity information of the non-privacy data subject is verified according to the first identity public key, where the verification request includes the first identity public key of the non-privacy data subject, the first identity public key is the public key allocated to the non-privacy data subject by the management device, and the first identity public key is the identity identifier of the non-privacy data subject.

Further, the identity information of the non-privacy data subject is verified by the following steps.

At S21, whether the first identity public key is consistent with any one of a plurality of second identity public keys is determined, where the plurality of second identity public keys are identity public keys that have been issued by the management device, and the plurality of second identity public keys include at least the first identity public key.

At S22, in a case where the first identity public key is consistent with the second identity public key, it is determined that the identity information of the non-privacy data subject is legitimate.

Since the non-privacy data subject (e.g., an enterprise) can only use its own identity key public information (public key) during interaction, when the identity information of the non-privacy data subject is verified, whether a first public key is consistent with a third public key in the plurality of identity keys is only compared, and in a case where the first public key is consistent with the third public key in the plurality of identity keys, first data of a first data subject may be determined according to an association relationship between the recorded identity key and the first data.

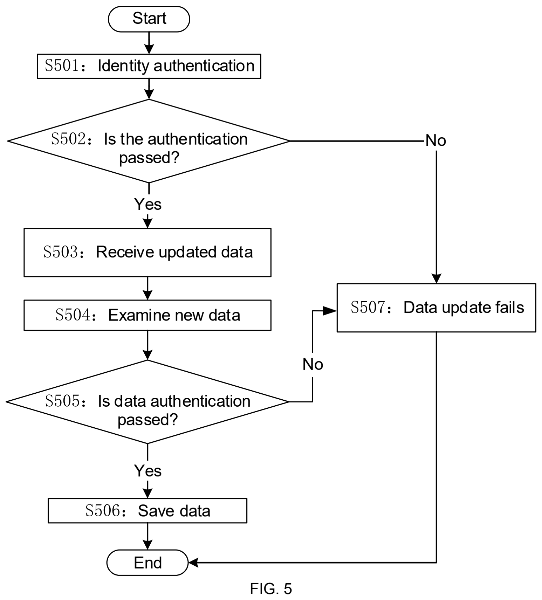

Optionally, the data subject may update data stored in a security device, and the manner of updating the data is shown in Fig. 5 and includes the following steps.

At S501, the data subject sends an update request to the administrative organization such that the administrative organization verifies the identity legitimacy of the data subject, where the update request includes an identity public key or sub-public key of the data subject.

At S502, whether the identity of the data subject is legitimate is determined.

At S503, in a case where the identity of the data subject is legitimate, the data subject sends updated data to the administrative organization.

At S504, the administrative organization examines the received new data to ensure the reliability and integrity of the data.

At S505, whether data authentication is passed is determined.

At S506, in a case where the data authentication is passed, the data is saved.

At S507, in a case where the identity of the data subject is illegitimate or the data authentication is not passed, data update fails.

Optionally, before the verification request sent by the data subject is received, the method further includes: a registration request sent by the data subject is received, where the registration request includes registration data of the data subject; identity information of the data subject is verified according to the registration data; and in a case where determining the identity information of the data subject is legitimate, the third identity key is sent to the data subject, and a correspondence relationship between the third identity key and the registration data is established.

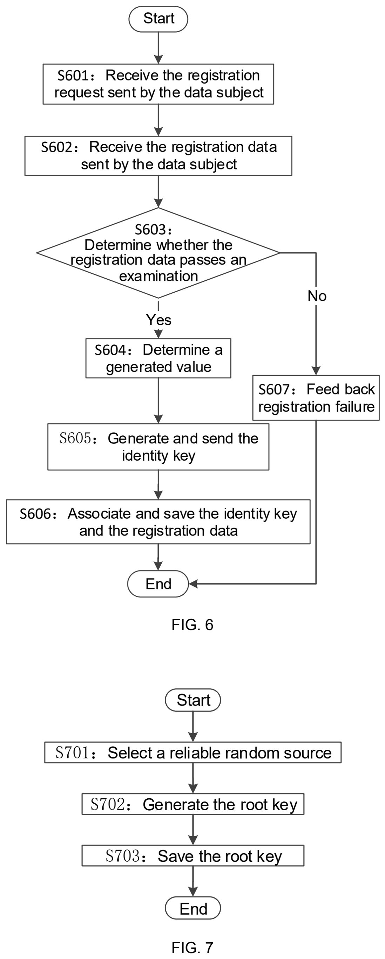

It may be understood that, a registration flow of the data subject is shown in Fig. 6. The registration data of the data subject includes data capable of verifying the identity or legitimacy of the data subject. For the privacy data subject (e.g., the natural person), the registration data is privacy data; and for the non-privacy data subject (e.g., the enterprise), the registration data is public data. Specific steps are as follows.

At S601, the registration request sent by the data subject is received.

At S602, the registration data sent by the data subject is received.

At S603, whether the registration data passes an examination is determined.

At S604, in a case where the registration data passes the examination, a generated value is determined.

It is to be noted that, the generated value must be a value related to a root key, and may be derived from the root key and a small amount of public information. For example, generated value = root public key + generated number. Subsequently, only the root public key and the maximum generated number need to be learned, such that all the generated value may be recovered, and all identity keys are obtained, facilitating backup and recovery.

At S605, a KDF algorithm is used, the root key and the generated value are used as inputs to derive the identity key, and the identity key is sent to the data subject.

At S606, the identity key and the registration data are associated and saved.

At S607, in a case where the registration data does not pass the examination, registration failure is fed back to the data subject.

Optionally, in the embodiments of the present disclosure, the plurality of identity keys may be generated in advance. Specifically, the root key is acquired, and a corresponding salt value is generated according to the root key; and the identity key of the root key corresponding to the salt value is determined based on the key derivation algorithm.

It may be understood that, the flow of acquiring the root key is shown in Fig. 7 and includes the following steps.

At S701, a reliable random source is selected.

Due to the utmost importance of the root key, the administrative organization must select the reliable random source to acquire a high-quality random number. The random source may be generated by using a dedicated hardware random source, such as a thermal noise generator, etc.

At S702, the root key is generated.

The above root key may be determined according to the key derivation algorithm (e.g., using a mainstream asymmetric encryption algorithm: ED25519, in combination with the random number).

At S703, the root key is saved.

The generated root key is properly saved, and an input value and a median value (e.g., the random number, etc.) used during generation of the root key are completely destroyed.

Optionally, before the verification request sent by the data subject is received, the method further includes: a first verification request sent by the data subject is received, where the first verification request is configured to request verification of the identity of the data subject, and the first verification request includes a public key of the third identity key of the data subject; the random number is sent to the data subject such that the data subject signs the random number according to a private key of the third identity key; and the signed random number sent by the data subject is received, and an identity verification result of the data subject is determined according to the signed random number.

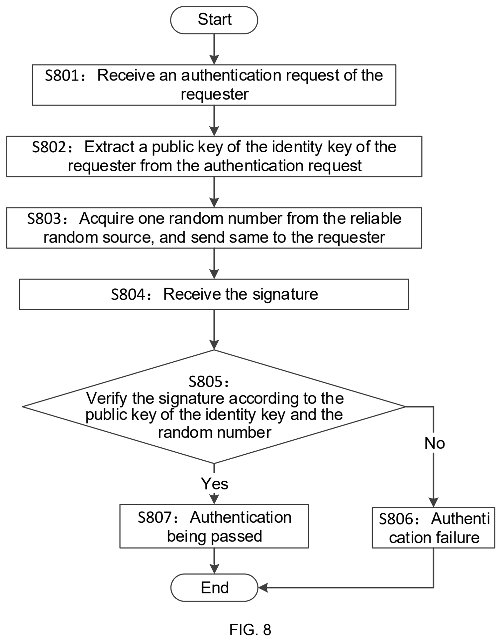

It may be understood that, before the verification request sent by the device subject is received, the method shown in Fig. 8 further includes the following steps.

At S801, the administrative organization receives an authentication request of the requester (which is equivalent to the above data subject), where the authentication request includes public key data of an identity key of the requester.

At S802, the administrative organization extracts a public key of the identity key of the requester from the authentication request.

At S803, the administrative organization acquires one random number from the reliable random source, and sends same to the requester.

The requester signs the random number by using a private key of the identity key, and feeds back the signature to the administrative organization.

At S804, the administrative organization receives the signature.

At S805, the signature is verified according to the previously-obtained public key of the identity key and the random number.

At S806, in a case where the verification is not passed, an authentication failure and a reason are fed back, and the flow ends.

At S807, in a case where the verification is passed, the authentication is successful.

Optionally, the embodiments of the present disclosure further include: an access request sent by the data subject is received, where the access request is configured to request access to data of other data subjects; a type of the data of other data subjects is determined, where the type includes at least one of the following: a public type or a privacy type; and whether the data subject is allowed to access the data of other data subjects is determined according to the type of the data.

It may be understood that, the type of the data includes one of the following: the public type and the privacy type. For the public type, all devices have access rights. The public data mainly includes a public identity public key and public information. For the privacy type, only the privacy data subject itself can access its own privacy data, and no device has access to data of the privacy type that does not belong to it.

In a case where the type of the data is the privacy type, it is determined that the data subject is prohibited from accessing the data, the data subject is prohibited from accessing the data, then a permission examination fails, and a failure is directly fed back.

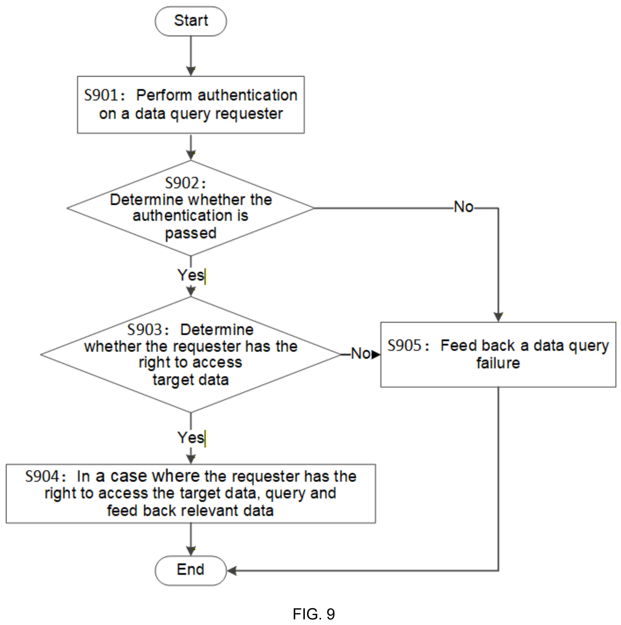

Specifically, a data query manner in the embodiments of the present disclosure is shown in Fig. 9, and specifically includes the following steps.

At S901, a data query requester (which is equivalent to the data subject in the above embodiments) is subjected to authentication.

At S902, whether the authentication is passed is determined.

At S903, in a case where the authentication is passed, whether the requester has the right to access target data is determined.

At S904, in a case where the requester has the right to access the target data, relevant data is queried and fed back.

At S905, in a case where the requester has no right to access the target data or the authentication is not passed, a data query failure is fed back.

In order to better understand the process of verifying the above identity information, an implementation flow of the above identity information verification method is described below with reference to the optional embodiments, but is not used to limit the technical solution of the embodiments of the present disclosure.

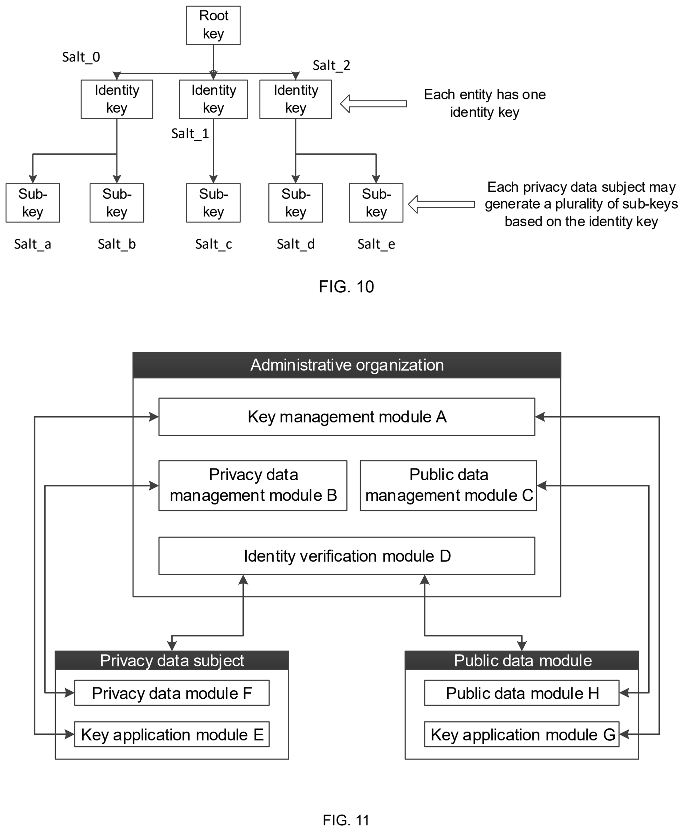

Fig. 10 is a schematic diagram of a layered key system according to an embodiment of the present disclosure. As shown in Fig. 10.
1) The root key and the identity key both are generated by the administrative organization. The identity key is generated by the root key and one generated value (which is also referred to as the salt value). The administrative organization records all generated identity keys, distributes same to each entity, and secretly saves the root key and the identity key.
2) The privacy data subject (e.g., the natural person) may derive the sub-key based on its own identity key and one generated value (salt value), and use the public key of the sub-key as a privacy information substitution value when interacting with the outside world. This derivation process does not require the involvement of the administrative organization. The privacy data subject needs to secretly save its own identity key (both the public key and the private key must not be exposed) and the sub-key private key, such that other entities cannot track and position a specific data subject by observing public data.
3) Since controlling the identity keys of all the privacy data subjects and the corresponding privacy data, the administrative organization can calculate, according to the public sub-public keys and the generated values, which identity key the data subject is derived from, and then associate and position the specific data subject in combination with the privacy data.
4) Some entities do not belong to the privacy data subjects (e.g., enterprises), such that the identity key (public key) must be directly used during interaction, and cannot derive and use the sub-key. Moreover, the public key of the identity key and the identity information are disclosed by the administrative organization, and any entity may verify its identity at any time.

To sum up, this solution eradicates the risk of privacy data exposure during data interaction by separating the privacy data from other entities and a specially-designed layered key system. A top administrative organization can still have the capability to audit and track information of all parties related to the interaction without directly monitoring or interfering in the interaction process.

Fig. 11 is a relationship diagram of a system module according to an embodiment of the present disclosure. As shown in Fig. 11.

A system in this embodiment of the present disclosure includes an administrative organization, a privacy data subject, and a public data subject.

In the system in this embodiment of the present disclosure, the administrative organization includes a key management module A, a privacy data management module B, a public data management module C, and an identity verification module D.

In the system in this embodiment of the present disclosure, the privacy data subject includes a key application module E and a privacy data module F.

In the system in this embodiment of the present disclosure, the public data subject includes a key application module G and a public data module H.
1) The module A is responsible for generating a root key of the entire system.
   When one managed subject registers with the administrative organization, the module A needs to generate an identity key for any managed subject by using the root key as a basis and one generated value, and sends a key to a corresponding subject (module E or module G). The module A must persistently save the root key and the generated value that has been used (if the generated value is designed to be able to be deduced according to the root key, only the root key may be saved). All the generated identity keys may also be further saved to improve the efficiency of subsequent flows.
2) The module B is responsible for managing and saving privacy data.
   Each time one privacy data subject (e.g., natural person) registers with the administrative organization, its own privacy data needs to be provided, the privacy data shall not be disclosed, and access is permitted only to the administrative organization and the data subject itself. The module B is responsible for receiving and safekeeping the data, and simultaneously recording an association relationship between the identity key generated by the module A and the privacy data for subsequent flow use.
3) The module C is responsible for managing and saving public data.
   Each time one public data subject (e.g., enterprise) registers with the administrative organization, the administrative organization and the subject need to determine its public data information (e.g., information such as business licenses, business addresses, etc.) together, and the data may be accessed by anyone. The module C is responsible for receiving and saving the data, and simultaneously recording an association relationship between the identity key generated by the module A and the public data for subsequent flow use.
4) The module D is responsible for verifying a specific identity key and the legitimacy of associated data.
   The identity key distributed to each data subject by the administrative organization is used during a data interaction flow, and any party involved in the interaction may inquire with the administrative organization about the legitimacy of the specific identity key (mainly querying whether the key has been registered). For the public data subject, whether the key and public information are matched may further be queried).
5) The module E is the key application module on the privacy data subject side.
   The module E is mainly responsible for safekeeping the identity key (private key) obtained from the administrative organization, and can simultaneously dynamically generate one sub-key based on the identity key and one generated value when the subject has a requirement. In a daily data interaction activity, the privacy data subject shall use the public key of the sub-key as a representation of its own identity, such that it is difficult for other interaction parties to track its specific privacy identity. The administrative organization has the capability to calculate the identity of the corresponding privacy data subject according to the sub-public key and the generated value.
6) The module F is responsible for managing the privacy data of the privacy data subject side.
   The module F is mainly responsible for safekeeping the privacy data of the data subject itself, and interacting with the administrative organization or performing content update when necessary (e.g., requiring to update partial privacy data content).
7) The module G is the key application module on the public data subject side.
   The module G is mainly responsible for safekeeping the identity key (private key) obtained from the administrative organization, and directly using the public key of the identity key as a representation of an interaction identity in the daily data interaction activity. The public data subject is not allowed to use an alternative identity (e.g., sub-key), any party participating in the interaction can confirm the legitimacy of the specific identity public key information according to the data disclosed by the administrative organization.
8) The module H is responsible for managing the data of the public data subject side.

The module H is mainly responsible for managing and saving the public data of the data subject itself, and interacting with the administrative organization or performing content update when necessary (e.g., requiring to update partial public data content).

Compared with the above system modules, privacy data of a privacy data subject in a traditional system is visible to all interaction parties, making it highly susceptible to exposure or illegal usage. Even if the random value is used in some improvement systems to replace the specific privacy information during interaction flow, such anonymous solution is often designed and implemented by a party participating in the interaction (e.g., an interaction between a natural person and a data enterprise). If the implementer of the anonymous solution is not reliable, the security of the privacy data cannot be ensured. Finally, in the traditional system, the top administrative organization has no enforceable constraints on the infringement of the privacy data, which can only enact relevant laws and regulations to impose penalties on relevant parties after infringement has occurred, and are unable to prevent or stop such infringement from happening.

In the system of the embodiments of the present disclosure, only the data subject itself and the administrative organization can access the privacy data, and other entities can no longer have access to the privacy data, such that the risk of intentional or unintentional privacy leakage is eliminated. When interacting with other entities, the privacy subject can switch and use different anonymous identities to replace its own privacy information at any time, such that other entities are prevented from tracking and identifying the identity of the privacy subject according to historical interaction records. The administrative organization does not directly participate in or interfere in the interaction flow between the entities, and also does not participate in or interfere in the processes of generating the privacy subject and switching the anonymous identity, achieving low management costs. The administrative organization has the capability to verify and track all identity keys issued by the administrative organization, and can also verify and track all anonymous identities (sub-keys) automatically generated by the privacy data subject. Current mainstream software and hardware system architectures may use this method without relying on any special hardware devices (e.g., trusted computing chips, etc.) and without relying on special network architectures (e.g., blockchains, etc.).

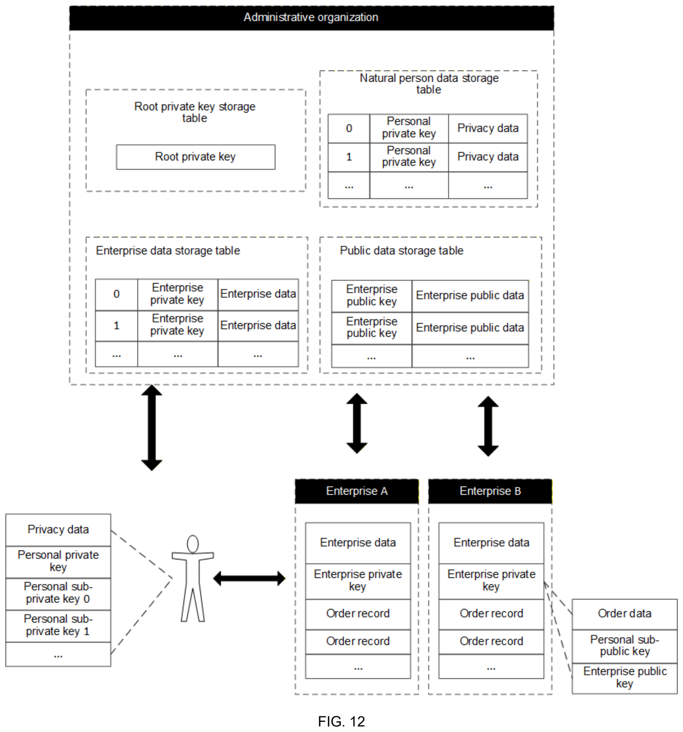

Fig. 12 is a schematic application diagram of an e-commerce scenario according to an embodiment of the present disclosure. As shown in Fig. 12, in this embodiment:
1) The administrative organization serves as an administrative organization role, the natural person serves as a privacy data subject role, and enterprises A and B serve as public data subject roles.
2) The administrative organization first generates the root key, and a key algorithm may use an asymmetric encryption algorithm such as ED25519, etc. For the root key, only the private key of the root key is used, such that the public key may not be saved. The root private key must be safely kept and should not be disclosed. The root key and other data may be separately stored in different data tables, or stored in different databases.
3) The administrative organization selects a KDF algorithm to generate a new identity key from the root key, and the KDF algorithm includes, but is not limited to, PBKDF2, HKDF, Scrypt, and Argon2. Then, the natural person also needs to use the same KDF algorithm when deriving the sub-key.
4) A root private key and one salt value (which is equivalent to the generated value) need to be used when the identity key is derived by using the KDF algorithm. For ease of backup and recovery, the generated value may use, as an initial value, a value that is related to a source key but unknown externally, and then the count is incremented by 1 each time the key is generated. In this way, all derived keys may be recovered by only backing up one source key and a maximum generated number, thereby saving a large number of storage spaces. In this embodiment, when deriving the identity key for the natural person or the enterprise, the administrative organization uses the public key of the root key as the initial value of the generated value, and the generated value is incremented by 1 each time a new identity key is generated. Since the public key and private key of the root key are not disclosed externally, the strength for generating the key is not reduced by using a root public key as a salt value of the KDF algorithm. In this case, the generated value is basically equal to the generated number, and the administrative organization may recover, according to the root key and the maximum number, all the identity keys that have been generated.
5) The natural person needs to use terminal software and hardware (e.g., mobile Apps developed by the administrative organization) to achieve interaction and data saving functions. The natural person needs to use the terminal to register with the administrative organization, and the administrative organization generates and distributes a personal private key to the natural person after an examination is passed, and simultaneously saves the number, private key, and privacy data in the corresponding data tables. The natural person terminal also needs to safely keep the personal private key and the privacy data (the data shall not be disclosed externally) for subsequent use.
6) The natural person terminal needs to input the personal private key and one generated value when using the KDF algorithm to generate the sub-key, and a selection rule of the generated value is specified by the administrative organization. For example, in this embodiment, the administrative organization stipulates that the generated value of the sub-key can only select within an integer range of [1, 2048] (this means that any natural person may use up to 2048 anonymous identities to participate in the external interaction).
7) Each enterprise also needs to provide information and register with the administrative organization, and the administrative organization generates and distributes an enterprise private key to the enterprise after an examination is passed, and simultaneously saves the number, private key, and enterprise data in the corresponding data tables. The enterprise itself also needs to safely keep the enterprise private key (which shall not be disclosed externally).
8) Each time a new enterprise registers with the administrative organization, the administrative organization extracts public information of the enterprise (an enterprise public key and information that must be disclosed by the enterprise) and saves same to the corresponding data list, and all the natural persons or enterprises that have been registered may acquire the public data through a data query flow.
9) When the natural person participates in an e-commerce interaction with an enterprise:
   the natural person terminal derives one sub-key (private key+public key) by using its own personal private key and one generated value through the KDF algorithm, and saves the newly-generated sub-key in the terminal.

If the natural person has generated some sub-keys before, the natural person may also directly use the sub-key data.

The natural person no longer expose its own privacy data during the interaction with the enterprise, and only uses the sub-public key as a representation for its identity in order information. The enterprise uses its own enterprise public key as a representation for its identity.

The natural person and the enterprise both may verify the legitimacy of the other party's identity. The natural person may directly verify the legitimacy of the enterprise by the enterprise public key included in an order and the public data provided by the administrative organization (the public data includes, but is not limited to, whether the enterprise exists, whether the business scope of the enterprise matches the context of the order, etc.); and the enterprise may query, by using the sub-public key information included in the order, the administrative organization to verify whether the natural person is legitimate (querying the administrative organization to verify whether the natural person is legitimate includes, but is not limited to, querying whether this person exists, whether the age of this person is legitimate in the context of the current order, whether the fund balance of this person is sufficient to complete the current order, etc.)
10) The natural person may download all the public data in advance (and subscribe to public data change notifications from the administrative organization), such that the initiation of a query flow to the administrative organization during each enterprise interaction may be avoided.
11) If the natural person trusts a target enterprise or considers that the interaction with the enterprise does not require a high level of privacy protection, the natural person may use the same sub-public key during the plurality of interactions with the enterprise. For example, each sub-public key may perform verification for one time, thereby avoiding the initiation of the identity verification flow to the administrative organization during each interaction with the enterprise. However, correspondingly, the enterprise has the capability to dig partial information of the natural person from relevant orders (these orders are all related to the same client, what are his/her preferences, what are his/her usual shopping times, etc.) However, the enterprise still cannot directly obtain the privacy data of the natural person (e.g., name, gender, age, mobile phone number, **ID** number, etc.), and the amount of information that can be dug mainly depends on how long the natural person uses the same sub-key.
12) All functional modules in all the roles may be implemented by using any programming language, any programming framework, any interface interaction protocol according to actual requirements, as long as the above functional features and service flows can be met.

The core of the above embodiments is to implement a layer anonymous identity key system by using the KDF algorithm, such that the top administrative organization can efficiently and completely manage the privacy data and anonymous identities of the entire system, thereby maximizing the security of the privacy data while providing high application flexibility.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present disclosure substantially or parts making contributions to the conventional art may be embodied in form of software product, and the computer software product is stored in a storage medium (e.g., a Read Only Memory (ROM)/Random Access Memory (RAM), a magnetic disk and an optical disk), including a plurality of instructions configured to enable a terminal device (which may be a mobile phone, a computer, a server, a network device, or the like) to execute the method in each embodiment of the present disclosure.

This embodiment further provides an identity information verification system. The system is configured to implement the above embodiments and optional implementations, and what has been described will not be described again. As used below, the term "module" may be a combination of software and/or hardware that implements a predetermined function. Although the system described in the following embodiments is preferably implemented in software, but implementations in hardware, or a combination of software and hardware, are also possible and conceived.

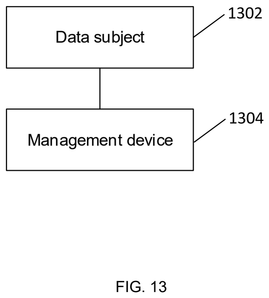

Fig. 13 is a structural block diagram of an identity information verification system according to an embodiment of the present disclosure. As shown in Fig. 13, the apparatus includes a data subject and a management device.

The data subject 1302 is configured to send a verification request to a management device.

The management device 1304 is configured to receive the verification request, and in a case where the verification request indicates verification of identity information of a privacy data subject, verify the identity information of the privacy data subject according to a first sub-public key in the verification request, where the verification request includes the first sub-public key of the privacy data subject, the first sub-public key is a public key generated by the privacy data subject according to a first identity key allocated by a management device and a preset rule, and the first sub-public key is an identity identifier of the privacy data subject.

Through the above system, in a case where the verification request indicates verification of identity information of the privacy data subject, the identity information of the privacy data subject is verified according to the first sub-public key in the verification request, where the verification request includes the first sub-public key of the privacy data subject, the first sub-public key is the public key generated by the privacy data subject according to the first identity key allocated by the management device and the preset rule, and the first sub-public key is the identity identifier of the privacy data subject. That is, the privacy subject in the embodiments of the present disclosure uses the identity key to derive the sub-key and uses the public key in the sub-key as the identity identifier, such that only the management device may verify the identity information of the privacy data subject according to the sub-key. The problems of low security, easy leakage, etc. of user privacy data in the related art may be solved, thereby achieving an effect of reducing privacy data exposure.

In an exemplary embodiment, the data subject is further configured to send a registration request to the management device, where the registration request includes registration data of the data subject; and the management device is configured to receive the registration request sent by the data subject, and verify identity information of the data subject; and in a case where determining the identity information of the data subject is legitimate, send the third identity key to the data subject, and establish a correspondence relationship between the third identity key and the registration data, where the third identity key is an identity key of the data subject.

In an exemplary embodiment, in a case where the data subject is a non-privacy data subject, the third identity key is received, and an identity public key in the third identity key is used as an identity identifier of the data subject; and in a case where the data subject is the privacy data subject, receiving the third identity key, a sub-key corresponding to the third identity key is generated according to the preset rule, and a sub-public key corresponding to the sub-key is used as the identity identifier of the data subject.

It is to be noted that, each of the above modules may be implemented by software or hardware. For the latter, it may be implemented in the following manners, but is not limited to the follow: the above modules are all located in a same processor; or the above modules are located in different processors in any combination.

For ease of understanding of the technical solutions provided in the present disclosure, detailed explanations are described with reference with the embodiments of specific scenarios.

An embodiment of the present disclosure further provides a computer-readable storage medium. The computer-readable storage medium stores a computer program. Steps in any one of the above method embodiments are executed when the computer program is configured to operate.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present disclosure further provides an electronic device. The electronic device includes a memory and a processor. The memory is configured to store a computer program. The processor is configured to run the computer program to execute steps in any one of method embodiments described above.

In an exemplary embodiment, the electronic device may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present application may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure are not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

## Claims

1. An identity information verification method, comprising:
receiving a verification request sent by a data subject; and
in response to the verification request indicating verification of identity information of a privacy data subject, verifying the identity information of the privacy data subject according to a first sub-public key in the verification request, wherein the verification request comprises the first sub-public key of the privacy data subject, the first sub-public key is a public key generated by the privacy data subject according to a first identity key allocated by a management device and a preset rule, and the first sub-public key is an identity identifier of the privacy data subject; and
the first identity key is an identity key of the privacy data subject.

2. The method according to claim 1, wherein verifying the identity information of the privacy data subject according to the first sub-public key in the verification request comprises:
determining whether the first sub-public key is consistent with any one of second sub-public keys corresponding to a plurality of identity keys saved in the management device, wherein the plurality of identity keys saved in the management device comprise at least: a first identity key of the privacy data subject and a third identity key of the data subject; and
in response to the first sub-public key is consistent with any one of the second sub-public keys corresponding to the plurality of identity keys saved in the management device, determining that the identity information of the privacy data subject is legitimate.

3. The method according to claim 2, wherein determining that the identity information of the privacy data subject is legitimate comprises:
determining a first identity key corresponding to any one of the second sub-public keys, and determining target data according to a correspondence relationship between the first identity key and the target data;
acquiring interaction information carried in the verification request, wherein the interaction information is used to indicate verification of whether the privacy data subject is legitimate in a target scenario;
verifying, according to the target data, whether the privacy data subject is legitimate in the target scenario; and
in response to the first sub-public key is consistent with any one of the second sub-public keys and it is determined that the privacy data subject is legitimate in the target scenario, determining that the identity information of the privacy data subject is legitimate.

4. The method according to claim 1, wherein after receiving the verification request sent by the data subject, the method further comprises:
in response to the verification request indicating verification of identity information of a non-privacy data subject, verifying the identity information of the non-privacy data subject according to a first identity public key, wherein the verification request comprises the first identity public key of the non-privacy data subject, the first identity public key is a public key allocated to the non-privacy data subject by the management device, and the first identity public key is an identity identifier of the non-privacy data subject.

5. The method according to claim 4, wherein verifying the identity information of the non-privacy data subject according to the first identity public key in the verification request comprises:
determining whether the first identity public key is consistent with any one of a plurality of second identity public keys, wherein the plurality of second identity public keys are identity public keys that have been issued by the management device, and the plurality of second identity public keys comprise at least the first identity public key; and
in response to the first identity public key is consistent with any one of the second identity public keys, determining that the identity information of the non-privacy data subject is legitimate.

6. The method according to claim 1, wherein before receiving the verification request sent by the data subject, the method further comprises:
receiving a registration request sent by the data subject, wherein the registration request comprises registration data of the data subject;
verifying identity information of the data subject according to the registration data; and
in response to determining the identity information of the data subject is legitimate, sending the third identity key to the data subject, and establishing a correspondence relationship between the third identity key and the registration data, wherein the third identity key is an identity key of the data subject.

7. The method according to claim 6, wherein before receiving the registration request sent by the data subject, the method further comprises:
acquiring a root key, and generating a corresponding salt value according to the root key; and
determining, based on a key derivation algorithm, the third identity key of the root key corresponding to the salt value.

8. An identity information verification system, comprising:
a data subject, configured to send a verification request to a management device; and
the management device, configured to receive the verification request, and in response to the verification request indicating verification of identity information of a privacy data subject, verify the identity information of the privacy data subject according to a first sub-public key in the verification request, wherein the verification request comprises the first sub-public key of the privacy data subject, the first sub-public key is a public key generated by the privacy data subject according to a first identity key allocated by a management device and a preset rule, and the first sub-public key is an identity identifier of the privacy data subject; and the first identity key is an identity key of the privacy data subject.

9. The system according to claim 8, comprises:
the data subject, further configured to send a registration request to the management device, wherein the registration request comprises registration data of the data subject; and
the management device, configured to receive the registration request sent by the data subject, and verify identity information of the data subject; and in response to determining the identity information of the data subject is legitimate, send the third identity key to the data subject, and establish a correspondence relationship between the third identity key and the registration data, wherein the third identity key is an identity key of the data subject.

10. The system according to claim 9, comprises:
in response to the data subject is a non-privacy data subject, receiving the third identity key, and using an identity public key in the third identity key as an identity identifier of the data subject; and
in response to the data subject is the privacy data subject, receiving the third identity key, generating, according to the preset rule, a sub-key corresponding to the third identity key, and using a sub-public key corresponding to the sub-key as the identity identifier of the data subject.

11. A computer-readable storage medium, having a computer program stored therein, wherein the computer program is configure to, when being executed by a processor, implement steps of the method according to any one of claims 1 to 7.

12. An electronic device, comprising a memory, a processor, and a computer program that is stored in the memory and executable by the processor, wherein the processor is configure to, when executing the computer program, implement steps of the method according to any one of claims 1 to 7.
